# EUROPÄISCHE PATENTSCHRIFT

(11) **EP 2 265 425 B1**
(45) Veröffentlichungstag und Bekanntmachung des Hinweises auf die Patenterteilung: **29.11.2017**
(21) Anmeldenummer: 09720986.0
(22) Anmeldetag: 02.03.2009
(51) Int. Cl.: B29C 45/17

(54) **VERFAHREN UND VORRICHTUNG ZUM SPRITZGIEßEN VON HOHLEN FORMTEILEN AUS KUNSTSTOFF**
METHOD AND APPARATUS FOR INJECTION-MOLDING HOLLOW PLASTIC ARTICLES
PROCÉDÉ ET DISPOSITIF DE MOULAGE PAR INJECTION DE PIÈCES MOULÉES CREUSES EN MATIÈRE PLASTIQUE

(30) Priorität: 11.03.2008 EP 08152561
(43) Veröffentlichungstag der Anmeldung: 29.12.2010
(73) Patentinhaber: BASF SE, 67056 Ludwigshafen am Rhein (DE)
(72) Erfinder: Jakobi, Reinhard, 67133 Maxdorf (DE); Schmid, Jochen, 69221 Dossenheim (DE); Klenz, Rainer, 67454 Haßloch (DE); Nachtigäller, Tobias, 68161 Mannheim (DE)
(74) Vertreter: BASF IP Association
(86) Internationale Anmeldenummer: PCT/EP2009/052429
(87) Internationale Veröffentlichungsnummer: WO 2009/112387

(56) Entgegenhaltungen:
- WO-A-98/34771
- DE-A1- 19 715 349
- DE-B3- 10 339 859
- RUPPRECHT, V.; OP DE LAAK, M.: "Die Qual der Wahl" KUNSTSTOFFE, [Online] Nr. 09, 2006, Seiten 115-120, XP002521986 Munich Gefunden im Internet: URL:http://www.kunststoffe.de/ku/o_archiv. asp> [gefunden am 2009-03-31]

## Beschreibung

Die Erfindung betrifft ein Verfahren zum Spritzgießen von Formteilen aus Kunststoff, wobei die Formteile mindestens einen Hohlraum aufweisen, welches die folgenden Schritte umfasst:
a) Einspritzen von Kunststoffschmelze von einer Einspritzeinheit entlang eines Schmelzefließweges, der zumindest teilweise durch ein Heißkanalsystem gebildet wird, in die Kavität eines Spritzgießwerkzeuges, bis die Kavität vollständig gefüllt ist,
b) Einspritzen eines Fluids aus einem Injektor in die in der Kavität befindliche Kunststoffschmelze, so dass ein Teil dieser Kunststoffschmelze an die Wand der Kavität gepresst wird, und ein überschüssiger Teil der Kunststoffschmelze in den Schneckenvorraum der Einspritzeinheit zurückgepresst wird,
c) Verfestigenlassen des noch in der Kavität befindlichen Kunststoffs, bis dieser selbsttragend das Formteil bildet,
d) Entleeren des Fluids über den Injektor,
e) Entformen des Formteils aus der Kavität des Spritzgießwerkzeuges,
wobei das Einspritzen von Kunststoffschmelze gemäß Schritt a) entlang eines ersten Schmelzefließwegs, der zumindest teilweise durch einen ersten Heißkanal gebildet wird, erfolgt, und das Zurückpressen des überschüssigen Teils der Kunststoffschmelze in den Schneckenvorraum der Einspritzeinheit gemäß Schritt b) entlang eines zweiten Schmelzefließweges, der durch einen zweiten Heißkanal gebildet wird, erfolgt.

Verfahren zum Spritzgießen von Hohlraum-aufweisenden Formteilen aus Kunststoff sind bekannt. So lassen sich beispielsweise mit der in der Literatur beschriebenen und dem Fachmann bekannten sogenannten Fluidinjektionstechnik komplex geformte Hohlkörper im Spritzgießverfahren herstellen, wobei qualitativ hochwertige Oberflächen und geringeres Formteilgewicht erreichbar sind. Als Fluid werden dabei sowohl Flüssigkeiten als auch Gase eingesetzt. Vorteilhaft beim Einsatz eines flüssigen Mediums mit hoher Wärmekapazität, wie beispielsweise Wasser, ist, dass die Kühlzeiten der spritzgegossenen Formteile vergleichsweise gering sind, was die Produktivität erhöht.

So beschreiben Rupprecht, V. und op de Laak, M. ("Die Qual der Wahl", Kunststoffe, München, Nr. 09, 2006, Seiten 115 - 120) verschiedene Spritzgießverfahren unter Einsatz der Fluidinjektionstechnik.

Grundsätzlich unterscheidet man bei der Fluidinjektionstechnik mehrere Varianten, je nach dem, wohin die noch flüssige Kunststoffschmelze durch das eingeleitete Fluid verdrängt wird.

Beim Teilfüllungsverfahren, wie es beispielsweise in US 4,830,812 offenbart wird, wird die Kavität nur teilweise mit Kunststoffschmelze gefüllt, und das Formteil erst durch das Fluid vollständig ausgeformt. Dabei entstehen allerdings bedingt durch den zwischenzeitlichen Schmelzestillstand Markierungen auf der Bauteiloberfläche, die insbesondere bei Sichtteilen und später zu lackierenden Teilen nicht toleriert werden können.

Eine weitere Variante wird in DE-A 39 13 109 beschrieben. Nach vollständiger Füllung der Kavität mit Kunststoffschmelze wird durch Einpressen des Fluids ein Teil der Kunststoffschmelze in eine Nebenkavität verdrängt. Dieses Verfahren hat den Nachteil, dass sehr viel Kunststoff (häufig 50 % des gesamten eingespritzten Kunststoffs) als Strang erstarrt und wieder rezykliert werden muss. Dies ist mit erhöhten Kosten und erhöhtem Energieaufwand verbunden. Das rezyklierte Kunststoffmaterial aus der Nebenkavität wird aufgrund der thermischen und mechanischen Mehrbelastung auch immer schlechtere Eigenschaften aufweisen als nicht-rezyklierter Kunststoff.

Eine weitere Variante der Fluidinjektionstechnik ist das Masserückdrückverfahren. Bei diesem Verfahren wird der noch nicht erstarrte Kunststoff aus der Kavität wieder zurück in die Spritzeinheit verdrängt. In DE-A 101 14 419 wird u.a. eine solche Verfahrensvariante beschrieben. Bei diesem Verfahren wird die noch flüssige Kunststoffschmelze im Inneren des Formteils durch das Fluid nicht in eine Nebenkavität verdrängt, sondern zurück in den Schneckenvorraum der Spritzgießmaschine gedrückt. Der Anspritzpunkt sitzt bei diesem Verfahren an einem Ende der Kavität, der Injektor für das Fluid sitzt am gegenüberliegenden Ende der Kavität (s. DE-A 101 14 419, [0042] und Figur 3).

Diese Anordnung von Anspritzpunkt und Fluidinjektor ist mit Nachteilen verbunden. Wenn die mit Kunststoffschmelze gefüllte Kavität, insbesondere bei der Herstellung relativ langer Formteile, von oben, d.h. in Richtung der Schwerkraft, mit dem Fluid beaufschlagt wird, kann es zu Verwirbelungen von Schmelze und Fluid und daraus resultierender Lunkerbildung in der Formteilwandung kommen. Dies geschieht insbesondere, wenn eine Kombination aus Wasser und Gas (z. B. Luft oder Stickstoff) als Fluid benutzt wird.

Wenn zur Vermeidung dieser Verwirbelung und Lunkerbildung die mit Kunststoffschmelze gefüllte Kavität von unten, d.h. entgegen der Richtung der Schwerkraft, mit dem Fluid beschickt werden soll, ist die Kunststoffschmelze vorab von oben in die Kavität einzubringen. Dabei ist aber mit Freistahlbildung der Schmelze zu rechnen, welche zu deutlich sichtbaren Oberflächendefekten bis hin zu Kerben an der Oberfläche des Formteils führt.

Eine grundsätzlich denkbare horizontale Anordnung des Spritzgießwerkzeugs bzw. der Kavität, d.h. eine Anordnung, bei der der Anspritzpunkt der Kunststoffschmelze und der Fluidinjektor an seitlich gegenüberliegenden Enden der Kavität angebracht sind, so dass weder die Kunststoffschmelze noch das Fluid von oben und in Richtung der Schwerkraft eingebracht werden müssen, würde zwar die Freistrahlbildung bzw. Verwirbelung vermeiden bzw. verringern; allerdings ist diese Anordnung insbesondere bei großen und/oder langen Formteilen oftmals weder räumlich (das entsprechende Spritzgießwerkzeug würde seitlich mit den in der Praxis nötigen Holmen und den Sicherheitsgittern der Spritzgießmaschine kollidieren) noch apparativ (die übliche Entnahme der fertigen Formteile durch über dem Werkzeug angebrachte Roboter wäre deutlich erschwert) mit vertretbarem Aufwand zu realisieren.

Insbesondere längere Formteile, wie beispielsweise Dachrelinge, können daher nach bekannten Verfahren der Fluidinjektionstechnik nicht hergestellt werden, ohne Nachteile im Kunststoffverbrauch oder der Wand- und Oberflächenqualität in Kauf nehmen zu müssen.

Die DE 103 39 859 B3 offenbart ein Wasserinjektionstechnik-Verfahren zum Spritzgießen von Formteilen aus Kunststoff nach dem Oberbegriff des Anspruchs 1.

Der vorliegenden Erfindung lag daher die Aufgabe zugrunde, Verfahren und Vorrichtungen zum Spritzgießen von Hohlraum-aufweisenden Formteilen aus Kunststoff zur Verfügung zu stellen, die die genannten Nachteile nicht oder in geringerem Ausmaß aufweisen. Insbesondere sollten materialsparende und kostengünstige Verfahren und Vorrichtungen zur Verfügung gestellt werden, mit denen Hohlraum-aufweisende Formkörper herstellbar sind, die verbesserte Wand- und Oberflächenqualität aufweisen.

Demgemäß wurden die eingangs definierten Verfahren gefunden, wobei erfindungswesentlich ist, dass
- der erste Schmelzefließweg am unteren Ende der Kavität mündet, so dass die gemäß Schritt a) eingespritzte Kunststoffschmelze die Kavität entgegen der Richtung der Schwerkraft füllt, und
- der Injektor am unteren Ende der Kavität mündet, so dass das gemäß Schritt b) eingespritzte Fluid den überschüssigen Teil der Kunststoffschmelze entgegen der Richtung der Schwerkraft aus der Kavität verdrängt, und
- der zweite Schmelzefließweg vom oberen Ende der Kavität ausgehend zum Schneckenvorraum der Einspritzeinheit zurückgeführt wird, und
- der Kunststoff ausgewählt wird aus Polyethylen, Polypropylen, Polyvinylchlorid, Polystyrol, schlagfest modifiziertem Polystyrol (HIPS), Acrylnitril-Butadien-Styrol-Copolymeren (ABS), Acrylnitril-Styrol-Acrylat-Copolymeren (ASA), Methacrylat-Acrylnitril-Butadien-Styrol-Copolymeren (MABS), Styrol-Butadien-Blockcopolymeren, Polyamid, Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfonen, thermoplastisch verarbeitbarem Polyurethan (TPU) und Polyphenylenoxid (PPO).

Des Weiteren wurden Vorrichtungen zur Ausübung der erfindungsgemäßen Verfahren gefunden.

Die erfindungsgemäßen Verfahren und Vorrichtungen zum Spritzgießen von Formteilen aus Kunststoff, wobei die Formteile mindestens einen Hohlraum aufweisen, ermöglichen es, gegenüber bekannten Verfahren und Vorrichtungen auf materialsparende und kostengünstige Weise Formteile mit verbesserter Wand- und Oberflächenqualität bereit zu stellen.

Die erfindungsgemäßen Verfahren und Vorrichtungen werden im Folgenden beschrieben.

Der Schritt a) der erfindungsgemäßen Verfahren zum Spritzgießen von hohlen Formteilen aus Kunststoff umfasst das Einspritzen von Kunststoffschmelze von einer Einspritzeinheit entlang eines ersten Schmelzefließweges in die Kavität eines Spritzgießwerkzeuges, bis die Kavität vollständig gefüllt ist. Der erste Schmelzefließweg wird zumindest teilweise durch einen ersten Heißkanal gebildet. Heißkanal, bzw. Heißkanalsysteme, die einen oder mehrere Heißkanäle umfassen können, sind kommerziell verfügbare Vorrichtungen, die in Spritzgießwerkzeuge eingebaut werden können, um beispielsweise mittels elektrisch beheizter Rohr- und Bohrungskanäle den störungsfreien Transport von Kunststoffschmelze zu ermöglichen. Zur Durchführung des Schritts a) sind die dem Fachmann bekannten und in der Literatur beschriebenen Einspritzeinheiten und Heißkanalsysteme einsetzbar (Heißkanalsysteme sind beispielsweise beschrieben in "Der Heißkanal der zu Ihrem Kunststoff passt", Programmübersicht der Günther Heißkanaltechnik GmbH, 35066 Frankenberg, Ausgabe 000.001 aus 08/2007).

Im Schritt b) des erfindungsgemäßen Verfahrens erfolgt das Einspritzen eines Fluids aus einem handelsüblichen Injektor in die in der Kavität befindliche Kunststoffschmelze. Ein Teil der Kunststoffschmelze wird dadurch an die Wand der Kavität gepresst, wo er sofort oder während des weiteren Abkühlvorgangs unter Bildung der Formteilwandung verfestigt. Der zur Formteilbildung nicht benötigte, d.h. der überschüssige, Teil der Kunststoffschmelze wird durch das eindringende Fluid in den Schneckenvorraum der Einspritzeinheit zurückgepresst.

Erfindungswesentlich ist, dass dieses Zurückpressen des überschüssigen Teils der Kunststoffschmelze in den Schneckenvorraum entlang eines zweiten Schmelzefließweges erfolgt, welcher vom ersten Schmelzefließweg verschieden ist. Der zweite Schmelzefließweg wird zumindest teilweise durch einen zweiten Heißkanal gebildet wird. Der erste und der zweite Heißkanal können sowohl als separate Vorrichtungen, bevorzugt aber als unterschiedliche Heißkanäle innerhalb eines einzigen Heißkanalsystems ausgeführt und in das Spritzgießwerkzeug integriert sein. Durch die räumliche Separierung des ersten und zweiten Schmelzefließwegs wird es möglich, sowohl die Kunststoffschmelze als auch das Fluid in die Kavität zu füllen, ohne dass es zu Schmelze- oder Fluidstillstand oder Freistrahlbildung beim Füllen der Kavität kommt. Insbesondere ermöglicht die räumliche Separierung des ersten und zweiten Schmelzefließwegs die Anordnung sowohl des Anspritzpunkts der Kunststoffschmelze als auch des Fluidinjektors an einem Ende der Kavität, und die Anordnung des zweiten Schmelzefließwegs zur Ableitung der überschüssigen und vom Fluid verdrängten Kunststoffschmelze am gegenüberliegenden Ende der Kavität.

Erfindungswesentlich für die erfindungsgemäßen Verfahren ist, dass der erste Schmelzefließweg am unteren Ende der Kavität mündet, so dass die gemäß Schritt a) eingespritzte Kunststoffschmelze die Kavität entgegen der Richtung der Schwerkraft füllt. Der Injektor mündet bei der erfindungsgemäßen Ausführungsform ebenfalls am unteren Ende der Kavität, so dass das eingespritzte Fluid den überschüssigen Teil der Kunststoffschmelze ebenfalls entgegen der Richtung der Schwerkraft aus der Kavität verdrängt. Der zweite Schmelzefließweg wird bei dieser Ausführungsform vom oberen Ende der Kavität ausgehend zum Schneckenvorraum der Einspritzeinheit zurückgeführt. Es treten bei dieser erfindungsgemäßen Verfahrensführung weder Verwirbelungen noch Freistrahlbildung auf.

Im Schritt c) des erfindungsgemäßen Verfahrens erfolgt das Verfestigenlassen des noch in der Kavität befindlichen Kunststoffs, bis dieser selbsttragend das Formteil bildet.

Im Schritt d) des erfindungsgemäßen Verfahrens erfolgt das Entleeren des Fluids, bevorzugt über den Injektor.

Im abschließenden Schritt e) des erfindungsgemäßen Verfahrens erfolgt das Entformen des Formteils aus der Kavität des Spritzgießwerkzeuges.

Die zur Durchführung der Schritte c), d) und e) geeigneten Verfahrensparameter und Vorrichtungen sind dem Fachmann bekannt und in der Literatur beschrieben.

In einer bevorzugten Ausführungsform des erfindungsgemäßen Verfahrens ist um die Austrittsöffnung oder in der Nähe der Austrittsöffnung des Injektors eine Hilfskavität angeordnet. Während des Befüllvorgangs der Kavität mit Kunststoffschmelze gemäß Schritt a) ist diese Hilfskavität, beispielsweise durch ein Ventil, für die Kunststoffschmelze nicht zugänglich. Im wesentlichen zeitgleich mit dem Abschluss des Befüllvorgangs gemäß Schritt a), d.h. sobald die Kavität vollständig mit Kunststoffschmelze gefüllt ist, beziehungsweise kurz vor oder kurz nach diesem Zeitpunkt, wird auch die Hilfskavität, beispielsweise durch Öffnen des vorher geschlossenen Ventils vor der Hilfskavität, mit Kunststoffschmelze gefüllt. Dadurch wird erreicht, dass sich im Bereich des Injektors befindliche Kunststoffschmelze vor dem Einspritzen des Fluids nur über einen möglichst kurzen Zeitraum abkühlen kann, so dass der Fluiddruck des Injektors die verfestigte Kunststoffschmelze (oder Randschicht) noch durchbrechen kann.

Als Fluid zum Einsatz in den erfindungsgemäßen Verfahren ist jede mit der Kunststoffschmelze nicht homogen mischbare Flüssigkeit oder ein Gas oder eine Mischung aus mit der Kunststoffschmelze nicht homogen mischbarer Flüssigkeit und einem Gras geeignet. Bevorzugt als Fluid einsetzbaren Flüssigkeiten sind solche mit einer hohen Wärmekapazität, insbesondere Wasser. Bevorzugt als Fluid einsetzbare Gase sind Luft und insbesondere Stickstoff. Selbstverständlich ist es bei den erfindungsgemäßen Verfahren auch möglich, eine Flüssigkeit als Fluid zu verwenden, die bereits während oder nach dem Einfüllen in die Kavität teilweise oder vollständig in den gasförmigen Zustand übergeht.

In einer besonders bevorzugten Ausführungsform wird das Fluid an seiner Fließfront von einem Gas, insbesondere Luft und/oder Stickstoff, gebildet und das nachströmende Fluid hinter der Fließfront von einer mit der Kunststoffschmelze nicht homogen mischbaren Flüssigkeit, insbesondere Wasser, gebildet. Dies kann beispielsweise erreicht werden, indem der Injektor durch zwei Zuleitungen mit entsprechenden Ventilen gespeist wird, und in Schritt b) des erfindungsgemäßen Verfahrens zuerst eine geringe Menge Gas und direkt anschließend die Flüssigkeit aus dem Injektor in die Kavität eindosiert wird.

Als Kunststoff sind in den erfindungsgemäßen Verfahren erfindungsgemäß ein oder mehrere Kunststoffe ausgewählt aus Polyethylen, Polypropylen, Polyvinylchlorid, Polystyrol, schlagfest modifiziertem Polystyrol (HIPS), Acrylnitril-Butadien-Styrol-Copolymeren (ABS), Acrylnitril-Styrol-Acrylat-Copolymeren (ASA), Methacrylat-Acrylnitril-Butadien-Styrol-Copolymeren (MABS), Styrol-Butadien-Blockcopolymeren, Polyamid, Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfonen, thermoplastisch verarbeitbarem Polyurethan (TPU) und Polyphenylenoxid (PPO) geeignet. Besonders bevorzugte Kunststoffe sind Polyamide.

Die genannten Kunststoffe können in reiner Form oder als Mischung mit kunststoffüblichen Hilfsstoffen eingesetzt werden. In einer bevorzugten Ausführungsform werden mit faserförmigen oder teilchenförmigen Füllstoffen versehene Kunststoffe eingesetzt. Besonders geeignete Füllstoffe sind Glasfasern, Glaskugeln, mineralische Füllstoffe, oder so genannte Nanopartikel. Ganz besonders bevorzugte Kunststoffe sind glasfaserverstärkte Polyamide.

In einer weiteren Ausführungsform des erfindungsgemäßen Verfahrens kann in der Kavität vor dem Einspritzen der Kunststoffschmelze durch Einbringen eines Gases ein erhöhter Druck aufgebaut werden.

Weiterhin ist es möglich, das eindosierte Fluid vorab zu temperieren, im Fall von Wasser beispielsweise auf Temperaturen zwischen 4 und 15°C, um ausreichend hohe Abkühlraten der Kunststoffschmelze zu realisieren.

In einer weiteren Ausführungsform des erfindungsgemäßen Verfahrens kann das entleeren des Fluids beispielsweise durch Einpressen von Druckluft, Ausblasen, Absaugen, gegebenenfalls unter Anlegen eines Vakuums oder den Einsatz separater Ablaufventile unterstützt werden.

Diese und grundsätzlich weitere geeignete Ausführungsformen des erfindungsgemäßen Verfahrens werden beispielsweise in der DE-A 101 14 419 beschrieben, auf die an dieser Stelle ausdrücklich Bezug genommen wird.

Weitere Verfahrensparameter, wie beispielsweise Schmelzetemperaturen und Spritzgießdrücke, richten sich beispielsweise nach den zu verarbeitenden Kunststoffen und der Formteilgeometrie, und sind dem Fachmann bekannt und in der Literatur beschrieben.

Zur Ausübung der erfindungsgemäßen Verfahren geeignete erfindungsgemäße Vorrichtungen umfassen eine Einspritzeinheit zum Einspritzen von Kunststoffschmelze, einen zumindest teilweise durch ein Heißkanalsystem gebildeten Schmelzefließweg, eine Kavität in einem Spritzgießwerkzeug und einen Injektor zum Einspritzen eines Fluids, wobei erfindungswesentlich ist, dass ausgehend von der Einspritzeinheit ein erster Schmelzefließweg, der zumindest teilweise durch einen ersten Heißkanal gebildet wird, und der Injektor in ein Ende der Kavität münden, und ein zweiter Schmelzefließweg, der zumindest teilweise durch einen zweiten Heißkanal gebildet wird, ausgehend vom gegenüberliegenden Ende der Kavität in die Einspritzeinheit zurückführt.

In einer bevorzugten Ausführungsform weisen die erfindungsgemäßen Vorrichtungen eine Hilfskavität um die Austrittsöffnung oder in der Nähe der Austrittsöffnung des Injektors auf.

Selbstverständlich ist es auch möglich, in einem einzigen Spritzgießwerkzeug mehrere Kavitäten anzuordnen, wobei jede einzelne Kavität jeweils mit den beschriebenen ersten und zweiten Schmelzefließwegen bzw. Heißkanälen verbunden ist. Auf diese Weise sind in einem einzigen Spritzgießvorgang nach den erfindungsgemäßen Verfahren mehrere Formteile, beispielsweise eine Dachreling für die rechte Kfz-Seite und eine Dachreling für die linke Kfz-Seite, herstellbar.

Die Funktionsweise der einzelnen Elemente der erfindungsgemäßen Vorrichtungen wurde bereits bei der Beschreibung der erfindungsgemäßen Verfahren dargelegt.

Nach den erfindungsgemäßen Verfahren und unter Verwendung der erfindungsgemäßen Vorrichtungen lassen sich grundsätzlich alle Hohlraum-aufweisenden Formteile herstellen, sofern deren Geometrie ein Öffnen des Spritzgießwerkzeugs und eine zerstörungsfreie Entformung zulässt. Insbesondere sind die erfindungsgemäßen Verfahren und Vorrichtungen zur Herstellung solcher Hohlraum-aufweisenden Formteile geeignet, die in zwei Raumrichtungen, bevorzugt in einer Raumrichtung, eine deutlich größere Ausdehnung besitzen als in der oder den anderen Raumrichtungen. Besonders geeignete Formteile sind in einer Ebene verlaufende Hohlprofilanordnungen, beispielsweise in einer Ebene liegende gewundene Kunststoffrohrsysteme, insbesondere Kühlwasserrohre zum Einsatz im Automobilbereich, oder langgestreckte, insbesondere zwischen 1 und 3 m lange, Hohlprofilteile, beispielsweise Dachrelinge zum Einsatz im Automobilbereich. Selbstverständlich können an den Hohlraum-aufweisenden Formkörpern beispielsweise auch flächig ausgebildete Elemente, Befestigungselemente oder andere durch Spritzgießverfahren zugängliche Formelemente angespritzt oder ausgebildet werden.

Die erfindungsgemäßen Verfahren und Vorrichtungen zum Spritzgießen von Formteilen aus Kunststoff, wobei die Formteile mindestens einen Hohlraum aufweisen, ermöglichen es, gegenüber bekannten Verfahren und Vorrichtungen auf materialsparende und kostengünstige Weise Formteile mit verbesserter Wand- und Oberflächenqualität bereit zu stellen.

Anhand der Zeichnung wird die Erfindung nachstehend näher erläutert.

Es zeigt:

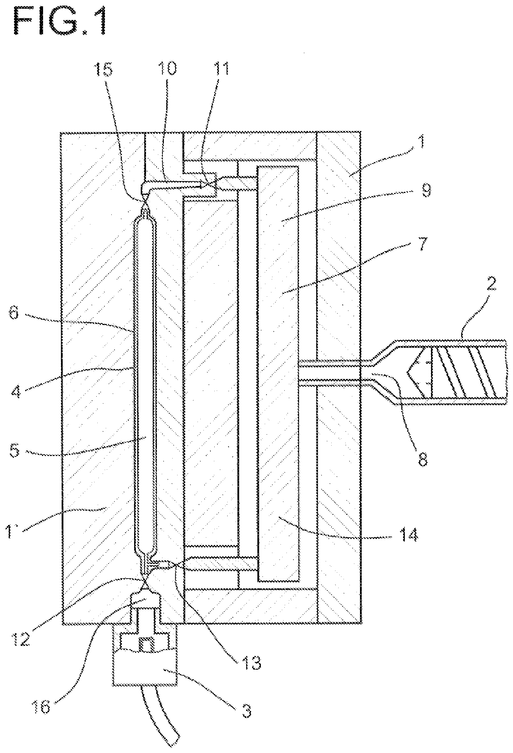

- Figur 1: Vorrichtung zum Spritzgießen von Formteilen aus Kunststoff, wobei die Formteile mindestens einen Hohlraum aufweisen (Seitenansicht, Richtung der Schwerkraft in der Papierebene von oben nach unten)

Figur 1 zeigt ein Spritzgießwerkzeug (1, 1') sowie angedeutet eine Einspritzeinheit (2) der Spritzgießmaschine, ein Heißkanalsystem (7) umfassend einen ersten Schmelzefließweg, der durch einen ersten Heißkanal (14) gebildet wird, und einen zweiten Schmelzefließweg, der durch einen zweiten Heißkanal (9) gebildet wird, sowie den Injektor (3) für das Fluid. Das Formteil (4), wie es nach dem Schritt c) der erfindungsgemäßen Verfahren in der Kavität (6) vorliegt, weist einen Hohlraum (5) auf, der sich über die Länge des Formteils (4) erstreckt. Vom Übergang (8) der Einspritzeinheit (2) ausgehend führt der erste als erster Heißkanal (14) ausgebildete Schmelzefließweg zum unteren Ende der Kavität (6). Der Injektor (3) mündet über eine Hilfskavität (16) ebenfalls in das untere Ende der Kavität (6). Vom oberen Ende der Kavität (6) ausgehend führt der zweite als zweiter Heißkanal (9) ausgebildete Schmelzefließweg zurück in den Übergang (8) der Einspritzeinheit (2). Zwischen Kavität (6) und dem zweiten Heißkanal (9) befindet sich ein Übergangsbereich (10), der mit dem Formteil (4) entformt wird.

Die Nadelverschlussdüse (11) des zweiten Heißkanals (9) am Ende des Übergangsbereiches (10) ist zum Zeitpunkt des Schrittes a) des erfindungsgemäßen Verfahrens geschlossen. Auch das Ventil (12) vor dem Injektor (3), der sich in der Nähe der geöffneten Mündungsdüse (13) des ersten Heißkanals (14) befindet, ist geschlossen. Über den ersten Heißkanal (14) wird die Kavität (6) und der Übergangsbereich (10) entgegen der Richtung der Schwerkraft vollständig mit Kunststoffschmelze gefüllt, Ventil (15) ist währenddessen geöffnet (Ventil (15) ist nicht zwingend notwendig, da dessen Funktion grundsätzlich auch durch Nadelverschlussdüse (11) erfüllt wird, verbessert aber die Verfahrensführung).

Gegen Ende der Schmelzefüllung wird das Ventil (12) geöffnet, so dass auch die Hilfskavität (16) vor dem Injektor (3) mit Schmelze gefüllt wird. Nach vollständiger Füllung schließt die Mündungsdüse (13).

Im Schritt b) der erfindungsgemäßen Verfahren wird das Fluid, im vorliegenden Fall Wasser, durch den Injektor (3) und das geöffnete Ventil (12) in die Kavität (6) geleitet und drückt die flüssige Kunststoffschmelze, die noch nicht an der Wand der Kavität (6) erstarrt ist, entgegen der Richtung der Schwerkraft zum oberen Ende der Kavität (6). Das Ventil (15) und die Nadelverschlussdüse (11) wurden geöffnet, so dass die verdrängte Schmelze über den Übergangsbereich (10) und den zweiten Heißkanal (9) zurück in den Übergang (8) der Einspritzeinheit (2) gedrückt wird. Sobald das Fluid den Übergangsbereich (10) erreicht hat, werden das Ventil (15) und die Nadelverschlussdüse (11) geschlossen. Somit kann das Fluid weiterhin Nachdruck in der Kavität (6) generieren, die Gefahr, dass Fluid in die Einspritzeinheit (2) gedrückt wird, wird vermieden.

Nach dem Verfestigen des Kunststoffs unter Bildung des Formteils (4) wird im Schritt d) des erfindungsgemäßen Verfahrens durch Öffnen des Injektors (3) der Überdruck in der Kavität (6) abgebaut, und das Wasser abgelassen.

Im letzten Schritt e), der Entformung, werden das Formteil (4) und die mittlerweile erstarrte Schmelze im Übergangsbereich (10) gemeinsam entformt.

Die in der Vorrichtung gemäß Fig. 1 und gemäß den erfindungsgemäßen Verfahren erhaltenen hohlen Formteile aus Kunststoff lassen sich materialsparend und kostengünstig herstellen. Diese Formteile weisen gegenüber Formteilen, bei denen das Wasser von oben in die Kavität gepresst und die Schmelze über den ersten Schmelzefließweg in die Einspritzeinheit zurückgeführt wurde, eine deutlich verbesserte Oberflächenqualität auf und besitzen keine Lunker oder Verwirbelungen in der Bauteilwand.

### Bezugszeichenliste

- 1, 1': Spritzgießwerkzeug
- 2: Einspritzeinheit
- 3: Injektor
- 4: Formteil
- 5: Hohlraum
- 6: Kavität
- 7: Heißkanalsystem
- 8: Übergang, Schneckenvorraum
- 9: zweiter Heißkanal
- 10: Übergangsbereich
- 11: Nadelverschlussdüse
- 12: Ventil (Sperrschieber)
- 13: Mündungsdüse (Nadelverschlussdüse)
- 14: erster Heißkanal
- 15: Ventil (Sperrschieber)
- 16: Hilfskavität

## Patentansprüche

1. Verfahren zum Spritzgießen von Formteilen (4) aus Kunststoff, wobei die Formteile (4) mindestens einen Hohlraum (5) aufweisen, welches die folgenden Schritte umfasst:
a) Einspritzen von Kunststoffschmelze von einer Einspritzeinheit (2) entlang eines Schmelzefließweges, der zumindest teilweise durch ein Heißkanalsystem (7) gebildet wird, in die Kavität (6) eines Spritzgießwerkzeuges (1, 1'), bis die Kavität (6) vollständig gefüllt ist,
b) Einspritzen eines Fluids aus einem Injektor (3) in die in der Kavität (6) befindliche Kunststoffschmelze, so dass ein Teil dieser Kunststoffschmelze an die Wand der Kavität (6) gepresst wird, und ein überschüssiger Teil der Kunststoffschmelze in den Schneckenvorraum der Einspritzeinheit (2) zurückgepresst wird,
c) Verfestigenlassen des noch in der Kavität (6) befindlichen Kunststoffs, bis dieser selbsttragend das Formteil (4) bildet,
d) Entleeren des Fluids über den Injektor (3),
e) Entformen des Formteils (4) aus der Kavität (6) des Spritzgießwerkzeuges (1,1')
wobei das Einspritzen von Kunststoffschmelze gemäß Schritt a) entlang eines ersten Schmelzefließwegs, der zumindest teilweise durch einen ersten Heißkanal (14) gebildet wird, erfolgt,
und das Zurückpressen des überschüssigen Teils der Kunststoffschmelze in den Schneckenvorraum der Einspritzeinheit (2) gemäß Schritt b) entlang eines zweiten Schmelzefließweges, der durch einen zweiten Heißkanal (9) gebildet wird, erfolgt, **dadurch gekennzeichnet, dass**
- der erste Schmelzefließweg am unteren Ende der Kavität (6) mündet, so dass die gemäß Schritt a) eingespritzte Kunststoffschmelze die Kavität (6) entgegen der Richtung der Schwerkraft füllt, und
- der Injektor (3) am unteren Ende der Kavität (6) mündet, so dass das gemäß Schritt b) eingespritzte Fluid den überschüssigen Teil der Kunststoffschmelze entgegen der Richtung der Schwerkraft aus der Kavität (6) verdrängt, und
- der zweite Schmelzefließweg vom oberen Ende der Kavität (6) ausgehend zum Schneckenvorraum der Einspritzeinheit (2) zurückgeführt wird, und
- der Kunststoff ausgewählt wird aus Polyethylen, Polypropylen, Polyvinylchlorid, Polystyrol, schlagfest modifiziertem Polystyrol (HIPS), Acrylnitril-Butadien-Styrol-Copoly-meren (ABS), Acrylnitril-Styrol-Acrylat-Copolymeren (ASA), Methacrylat-Acrylnitril-Butadien-Styrol-Copolymeren (MABS), Styrol-Butadien-Blockcopolymeren, Polyamid, Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfonen, thermoplastisch verarbeitbarem Polyurethan (TPU) und Polyphenylenoxid (PPO).

2. Verfahren gemäß Anspruch 1, **dadurch gekennzeichnet, dass** das Fluid eine mit der Kunststoffschmelze nicht homogen mischbare Flüssigkeit oder ein Gas oder eine Mischung aus beidem ist.

3. Verfahren gemäß Ansprüchen 1 bis 2, **dadurch gekennzeichnet, dass** das Fluid an seiner Fließfront von einem Gas gebildet wird und das nachströmende Fluid hinter der Fließfront von einer mit der Kunststoffschmelze nicht homogen mischbare Flüssigkeit gebildet wird.

4. Verfahren gemäß Ansprüchen 1 bis 3, **dadurch gekennzeichnet, dass** als gasförmiges Fluid Stickstoff oder Luft und als mit der Kunststoffschmelze nicht homogen mischbare Flüssigkeit Wasser eingesetzt wird.

5. Verfahren gemäß Ansprüchen 1 bis 4, **dadurch gekennzeichnet, dass** eine Hilfskavität (16), die um die Austrittsöffnung oder in der Nähe der Austrittsöffnung des Injektors (3) angeordnet ist, während des Befüllvorgangs der Kavität (6) gemäß Schritt a) für die Kunststoffschmelze nicht zugänglich ist, im wesentlichen zeitgleich mit dem Abschluss des Befüllvorgangs gemäß Schritt a) aber ebenfalls mit der Kunststoffschmelze gefüllt wird.

6. Verfahren gemäß Ansprüchen 1 bis 5, **dadurch gekennzeichnet, dass** als Kunststoff glasfaserverstärktes Polyamid eingesetzt wird.

7. Vorrichtung zur Ausübung eines Verfahrens nach Ansprüchen 1 bis 6, umfassend eine Einspritzeinheit (2) zum Einspritzen von Kunststoffschmelze, einen Schmelzefließweg, der zumindest teilweise durch ein Heißkanalsystem (7) gebildet wird, eine Kavität (6) in einem Spritzgießwerkzeug (1, 1') und einen Injektor (3) zum Einspritzen eines Fluids,
**dadurch gekennzeichnet, dass** ausgehend von der Einspritzeinheit (2) ein erster Schmelzefließweg, der zumindest teilweise durch einen ersten Heißkanal (14) gebildet wird, und der Injektor (3) in ein Ende der Kavität (6) münden, und ein zweiter Schmelzefließweg, der zumindest teilweise durch einen zweiten Heißkanal (9) gebildet wird, ausgehend vom gegenüberliegenden Ende der Kavität (6) in die Einspritzeinheit (2) mündet.

8. Vorrichtung gemäß Anspruch 7, **dadurch gekennzeichnet, dass** eine Hilfskavität (16) um die Austrittsöffnung oder in der Nähe der Austrittsöffnung des Injektors (3) angeordnet ist.

## Claims

1. A process for the injection molding of plastics moldings (4), where the moldings (4) have at least one unoccupied space (5), and the process comprises the following steps:
a) injection of plastics melt from an injection unit (2) along a melt flow path, which is formed at least to some extent via a hot runner system (7), into the cavity (6) of an injection mold (1, 1'), until the cavity (6) has been completely filled,
b) injection of a fluid from an injector (3) into the plastics melt located in the cavity (6), so that a portion of said plastics melt is forced onto the wall of the cavity (6), and an excess portion of the plastics melt is forced back into the space in front of the screw of the injection unit (2),
c) permitting the plastic remaining in the cavity (6) to solidify, until this becomes self-supporting and forms the molding (4),
d) removal of the fluid by way of the injector (3),
e) demolding of the molding (4) from the cavity (6) of the injection mold (1,1'),
where the injection of plastics melt according to step a) takes place along a first melt flow path, which is formed at least to some extent via a first hot runner (14)
and the forcing of the excess portion of the plastics melt back into the space in front of the screw of the injection unit (2) according to step b) takes place along a second melt flow path, which is formed via a second hot runner (9), wherein
- the first melt flow path leads to the lower end of the cavity (6), so that the plastics melt injected according to step a) is charged to the cavity (6) in a direction opposite to that of gravity, and
- the injector (3) leads to the lower end of the cavity (6), so that the fluid injected according to step b) displaces the excess portion of the plastics melt from the cavity (6) in a direction opposite to that of gravity, and
- the second melt flow path is conducted back to the space in front of the screw of the injection unit (2) from the upper end of the cavity (6), and
- the plastic is selected from polyethylene, polypropylene, polyvinyl chloride, polystyrene, impact-modified polystyrene (HIPS), acrylonitrile-butadiene-styrene copolymers (ABS), acrylonitrile-styrene-acrylate copolymers (ASA), methacrylate-acrylonitrile-butadiene-styrene copolymers (MABS), styrenebutadiene block copolymers, polyamide, polyethylene terephthalate (PET), polyethylene terephthalate glycol (PETG), polybutylene terephthalate (PBT), polyoxymethylene (POM), polycarbonate (PC), polymethyl methacrylate (PMMA), polysulfones or polyether sulfones, thermoplastically processible polyurethane (TPU), and polyphenylene oxide (PPO).

2. The process according to claim 1, wherein the fluid is a liquid not homogeneously miscible with the plastics melt, or is a gas, or is a mixture of the two.

3. The process according to claims 1 to 2, wherein the fluid is formed at its flow front by a gas, and the subsequent stream of fluid behind the flow front is formed by a liquid not homogeneously miscible with the plastics melt.

4. The process according to claims 1 to 3, wherein the gaseous fluid used comprises nitrogen or air, and the liquid used and not homogeneously miscible with the plastics melt comprises water.

5. The process according to claims 1 to 4, wherein an auxiliary cavity (16) arranged around the discharge opening or in the vicinity of the discharge opening of the injector (3) is not accessible for the plastics melt during the charging procedure for the cavity (6) according to step a), but the plastics melt is similarly charged thereto, substantially simultaneously with the completion of the charging procedure according to step a).

6. The process according to claims 1 to 5, wherein the plastic used comprises glassfiber-reinforced polyamide.

7. Apparatus for the conduct of a process according to claims 1 to 6, comprising an injection unit (2) for the injection of plastics melts, a melt flow path, which is formed at least to some extent via a hot runner system (7), a cavity (6) in an injection mold (1, 1'), and an injector (3) for the injection of a fluid,
wherein, starting from the injection unit (2), a first melt flow path, which is formed at least to some extent via a first hot runner (14), and the injector (3), lead to one end of the cavity (6), and a second melt flow path, which is formed at least to some extent via a second hot runner (9), leads from the opposite end of the cavity (6) into the injection unit (2).

8. The apparatus according to claim 7, wherein an auxiliary cavity (16) has been arranged around the discharge opening or in the vicinity of the discharge opening of the injector (3).

## Revendications

1. Procédé de moulage par injection de pièces moulées (4) en plastique, les pièces moulées (4) comprenant au moins une cavité (5), qui comprend les étapes suivantes :
a) l'injection d'une masse fondue de plastique par une unité d'injection (2) le long d'une voie d'écoulement de masse fondue, qui est au moins partiellement formée par un système de canal chauffé (7), dans la cavité (6) d'un outil de moulage par injection (1, 1'), jusqu'à ce que la cavité (6) soit entièrement remplie,
b) l'injection d'un fluide depuis un injecteur (3) dans la masse fondue de plastique se trouvant dans la cavité (6), de sorte qu'une partie de cette masse fondue de plastique soit poussée contre la paroi de la cavité (6), et qu'une partie en excès de la masse fondue de plastique soit repoussée dans l'antichambre de la vis de l'unité d'injection (2),
c) la solidification du plastique se trouvant encore dans la cavité (6) jusqu'à ce que celui-ci forme la pièce moulée (4) de manière autoportante,
d) l'évacuation du fluide par l'injecteur (3),
e) le démoulage de la pièce moulée (4) de la cavité (6) de l'outil de moulage par injection (1, 1'),
l'injection de la masse fondue de plastique selon l'étape a) ayant lieu le long d'une première voie d'écoulement de masse fondue qui est au moins partiellement formée par un premier canal chauffé (14), et le repoussement de la partie en excès de la masse fondue en plastique dans l'antichambre de la vis de l'unité d'injection (2) selon l'étape b) ayant lieu le long d'une deuxième voie d'écoulement de masse fondue, qui est formée par un deuxième canal chauffé (9), **caractérisé en ce que**
- la première voie d'écoulement de masse fondue débouche à l'extrémité inférieure de la cavité (6), de sorte que la masse fondue de plastique injectée selon l'étape a) remplisse la cavité dans la direction opposée à la force de pesanteur, et
- l'injecteur (3) débouche à l'extrémité inférieure de la cavité (6), de sorte que le fluide injecté selon l'étape b) refoule hors de la cavité (6) la partie en excès de la masse fondue de plastique dans la direction opposée à la force de pesanteur, et
- la deuxième voie d'écoulement de masse fondue retourne depuis l'extrémité supérieure de la cavité (6) vers l'antichambre de la vis de l'unité d'injection (2), et
- le plastique est choisi parmi le polyéthylène, le polypropylène, le polychlorure de vinyle, le polystyrène, le polystyrène à résistance aux impacts modifiée (HIPS), les copolymères d'acrylonitrile-butadiène-styrène (ABS), les copolymères d'acrylonitrile-styrène-acrylate (ASA), les copolymères de méthacrylate-acrylonitrile-butadiène-styrène (MABS), les copolymères séquencés de styrène-butadiène, le polyamide, le polyéthylène téréphtalate (PET), le polyéthylène téréphtalate glycol (PETG), le polybutylène téréphtalate (PBT), le polyoxyméthylène (POM), le polycarbonate (PC), le polyméthacrylate de méthyle (PMMA), les poly(éther)sulfones, le polyuréthane thermoplastique (TPU) et le polyoxyde de phénylène (PPO).

2. Procédé selon la revendication 1, **caractérisé en ce que** le fluide est un liquide non miscible de manière homogène avec la masse fondue de plastique ou un gaz ou un mélange des deux.

3. Procédé selon les revendications 1 à 2, **caractérisé en ce que** le fluide est formé par un gaz au niveau de son front d'écoulement et le fluide qui s'écoule après le front d'écoulement est formé par un liquide non miscible de manière homogène avec la masse fondue de plastique.

4. Procédé selon les revendications 1 à 3, **caractérisé en ce que** de l'azote ou de l'air est utilisé en tant que fluide gazeux et de l'eau en tant que liquide non miscible de manière homogène avec la masse fondue de plastique.

5. Procédé selon les revendications 1 à 4, **caractérisé en ce qu'**une cavité auxiliaire (16), qui est agencée autour de l'ouverture de sortie ou à proximité de l'ouverture de sortie de l'injecteur (3), n'est pas accessible à la masse fondue de plastique pendant le processus de remplissage de la cavité (6) selon l'étape a), mais est également remplie avec la masse fondue de plastique essentiellement au même moment que la fin du processus de remplissage selon l'étape a).

6. Procédé selon les revendications 1 à 5, **caractérisé en ce qu'**un polyamide renforcé par des fibres de verre est utilisé en tant que plastique.

7. Dispositif pour l'exécution d'un procédé selon les revendications 1 à 6, comprenant une unité d'injection (2) pour l'injection d'une masse fondue de plastique, une voie d'écoulement de masse fondue, qui est au moins partiellement formée par un système de canal chauffé (7), une cavité (6) dans un outil de moulage par injection (1, 1') et un injecteur (3) pour l'injection d'un fluide, **caractérisé en ce qu'**en partant de l'unité d'injection (2), une première voie d'écoulement de masse fondue, qui est au moins partiellement formée par un premier canal chauffé (14), et l'injecteur (3) débouchent dans une extrémité de la cavité (6), et une deuxième voie d'écoulement de masse fondue, qui est au moins partiellement formée par un deuxième canal chauffé (9), débouche dans l'unité d'injection (2) en partant de l'extrémité opposée de la cavité (6).

8. Dispositif selon la revendication 7, **caractérisé en ce qu'**une cavité auxiliaire (16) est agencée autour de l'ouverture de sortie ou à proximité de l'ouverture de sortie de l'injecteur (3).
